# EUROPEAN PATENT SPECIFICATION

(11) **EP 0 957 670 B1**
(45) Date of publication and mention of the grant of the patent: **10.04.2002**
(21) Application number: 96931317.0
(22) Date of filing: 04.09.1996
(51) Int. Cl.: A01D 41/12

(54) **SPREADER**
VERTEILER
EPANDEUR

(30) Priority: 19.09.1995 SE 9503253
(43) Date of publication of application: 24.11.1999
(73) Proprietor: REKORDVERKEN SWEDEN AB, 535 92 Kvänum (SE)
(72) Inventor: HOLMEN, Bengt, S-532 74 Skara (SE)
(74) Representative: Franzén, Lars Hjalmar
(86) International application number: SE9601093
(87) International publication number: WO9710701

(56) References cited:
- EP-A- 0 631 717
- DE-C- 3 704 755

## Description

The present invention relates generally to a device for spreading husks and chaff from the sieves of a harvester combine, said spreader comprising at least one disc which is rotatably mounted in a housing having an end wall facing away from the sieves and a peripheral wall formed with at least one outlet opened therein, said disc supporting on its face turned towards the sieves ejecting blades projecting from said disc face and supporting on its opposite face turned towards the end wall fan blades projecting from said opposite disc face.

Modern harvester combines are becoming larger and larger and their cutting tables wider and wider, considerably wider than the width of the combine proper. The spreader connected to the combine has a width approximately equal to that of the combine proper and it is designed to spread the chaff and husks after the threshing operation across an area which essentially corresponds to the width of the table, whereupon the chaff and husks are mulched down into the soil, often together with comminuted or chopped up straw or the like supplied from a rotary chopper likewise connected to the harvester combine, behind the spreader. The spreading width of the spreader has reached its ultimate limit, which in the latest models of harvester combines having very large tables (close to 9 m) means that the material cannot be spread all the way to the side edges of the threshed string on the field being harvested. The result is an uneven distribution of the chaff and husks across the threshed string (equalling the operative width of the cutting table) with consequential differing cultivation conditions involving poor growth in the areas adjacent the edges.

The main object of the invention is to provide a device of the kind outlined above in order to insure improved spreading of the chaff and husks on the ground across the entire width of the threshed string.

This main object of the invention is achieved by forming the disc with through recesses extending between the disc faces for supplying air from the disc face turned towards the sieves to the disc face turned towards the end wall and thus by means of the ejection blades and the fan blades throwing and blowing, respectively, the husks and the chaff across essentially the entire operative cutting width of the cutting table of the harvester combine.

The invention will be described in closer detail in the following with reference to the accompanying drawings, wherein
Fig 1. is a schematical view as seen obliquely from the front and showing the rear section of a harvester combine equipped with the spreader in accordance with the invention,
Fig 2. is a lateral view showing the spreader in accordance with the invention on an enlarged scale, and
Fig 3. is a perspective view as seen obliquely from above and showing one of several possible embodiments of a disc incorporated in the spreader.

The harvester combine designated generally by numeral 1 in the drawing figures, is essentially of a conventional design, with the exception of the spreader in accordance with the invention, which is designated generally by reference 2, and it comprises a pick-up-reel, not shown, and cutting table, also not shown, the width of which is considerably larger, for instance five to six times larger, than the width of the combine 1 proper. The straw-feed plants or the like to harvested are cut off on the cutting table and by means of conveyors, not illustrated, they are conveyed to a thresher, not either illustrated, wherein the straw and the grains are separated. By way of rocker conveyer, not shown, the straw is advanced to a rotary chopper 3 or the like, disposed at the rear end of the harvester combine 1 as seen in the direction of advancement A of the latter. In this rotary chopper 3 the straw is chopped or comminuted into smaller pieces, whereupon the comminuted material is spread by means of a spreader or the like, not shown in detail and disposed at a combine outlet 4, across an area of the ground, i.e. the field, which area essentially corresponds to the cutting width of the table.

The grain including chaff and husks 5 issued from the thresher, not shown, reach a separating device, not either shown in detail, including a number of sieves. The chaff and the husks 5 are separated from the heavier grain during the passage through the sieve, whereupon the chaffs and husks are conveyed in the direction towards the sieve outlet end.

The spreader in accorance with the invention, generally designated by reference 2, is positioned in the area of the outlet end of the sieve. In accordance with the embodiment of the spreader 2 shown and described and being the one particularly preferred at the moment, the spreader comprises two discs 6, which are arranged to rotate in opposite directions and which are mounted for rotational movement in a common housing 7 having an end wall 8 which is common to both discs and which is turned away the the sieves, and a peripheral wall 10 which is formed with an outlet opening 9 therein. The number of discs 6 may be varied according to application and in the present case two discs are shown but the spreader could equally well be equipped with only one disc or with more than two discs.

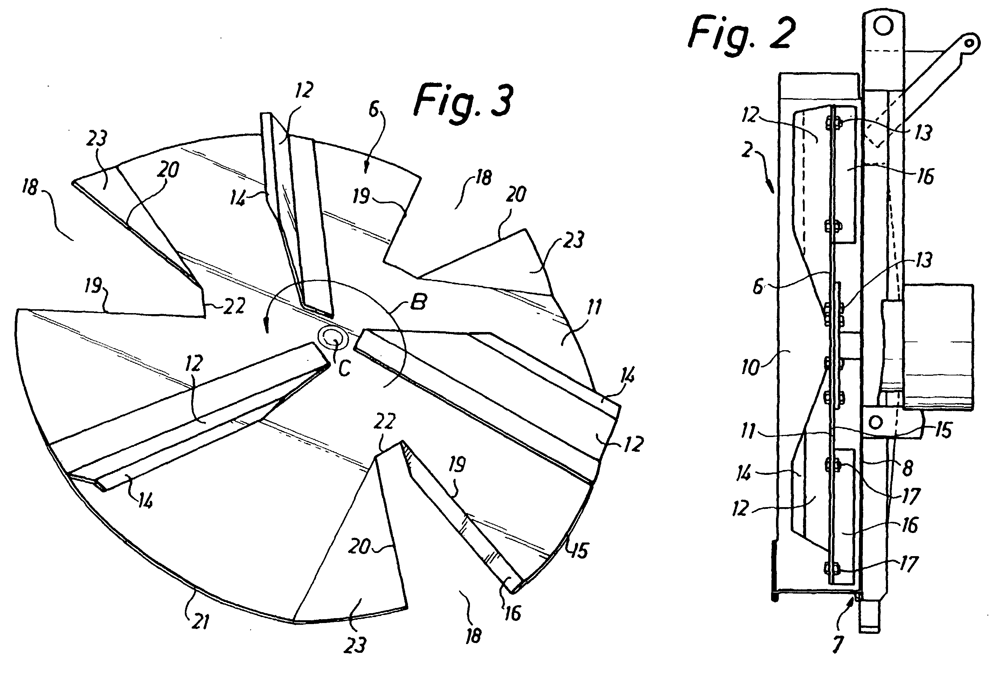

Each disc 6 is substantially flat, having an essentially circular profile configuration, and on its face turned towards the sieves, not shown, it supports ejection blades 12 projecting from the face 11. The number of ejection blades 12 may vary and in accordance with the embodiment shown three ejection blades 12 are provided, spaced equally apart across the face 11 of the disc 6. The ejection blades 12 may be mounted on the disc 6 by means of bolted joints 13, as illustrated in Fig. 2, and may be welded or glued to the face 11 of the disc 6 or attached thereto in some other way, as illustrated in Fig. 3. The ejection blades 12 extend obliquely upwards and outwards from the face 11 and are formed at their tops with a catch or trap flange 14 which is bent forward as seen in the direction of rotation B of the disc 6 and which may extend essentially in parallel to the plane of the disc 6.

At its opposite face 15 turned towards the end wall 8 each disc 6 supports fan blades 16 which project from face 15, essentially perpendicularly to the plane of the disc 6, and which may be mounted on this face 15 of the disc 6 by means of bolt joints 17 corresponding to the bolt joints 13 securing the ejection blades 12. Alternatively, the fan blades 16, in a similar manner to the ejection blades 12, may be mounted to the disc 6 by means of welding, glueing and the like.

The number of fan blades 16 may differ and in accordance with the embodiment described and illustrated three such blades are provided. The number of fan blades 16 need not either necessarily correspond to the number of ejection blades 12.

In accordance with the invention the disc or discs 6 are formed with through recesses 18 extending between the disc faces 11 and 15. The purpose of the recesses 18 is to supply air from the face 11 turned towards the sieves to the face 11 turned towards the end wall 8, thus allowing the chaff and husks 5 to be thrown by means of the ejection blades 12 and the fan blades 16 across essentially the entire cutting width of the cutting table of the harvester combine 1.

In accordance with the embodiment illustrated and described, which comprises three equally spaced ejection blades 12 and three equally spaced fan blades 16, the recesses 18 preferably are positioned intermediate two ejection blades 12 in succession, preferably essentially halfway between two such ejection blades. The number of recesses 18 intermediate two ejection blades in succession is one in accordance with the embodiment shown and described but in principle there is no objection to providing two or several recesses 18 intermediate two ejection blades 12 in succession, it obviously being possible to dimension and to configure these recesses differently from the recesses 18 illustrated in Fig. 3.

The size and configuration of the recesses 18 thus are comparatively optional, and in Fig. 3 the recesses 18, as seen essentially perpendicularly to the plane of the disc 6, are configured substantially as a sector of a circle, the lengthwise edges 19, 20 extending essentially radially towards the centre C of the disc 6, from the peripheral edge 21 of the disc to a point 22 situated intermediate the peripheral edge 21 and the centre C. Preferably, this point 22 intermediate the peripheral edge 21 of the disc 6 and the disc centre C, preferably is positioned closer to the centre C than to the peripheral edge 21, for instance two thirds of the distance inwardly from the peripheral edge to the centre, along the radius of the disc 6.

As previously mentioned, the number of fan blades 16 is optional, but preferably the number of fan blades corresponds to the number of recesses, the fan blades defining the front lengthwise edge 19 of the subsequent recess 18 as seen in the direction of rotation B of the disc. The trailing lengthwise edge of the recesses, as seen in the direction of rotation B of each disc 6, may be angled slightly obliquely upwards, as illustrated at 23, on the face 11 of the disc 6 turned towards the sieves, in order to further intensify the air supply to the fan blades on the opposite face 15 of the disc. Such bent or angled portions 23 could be entirely eliminated in certain applications whereas in others the number may differ from that of the recesses 18.

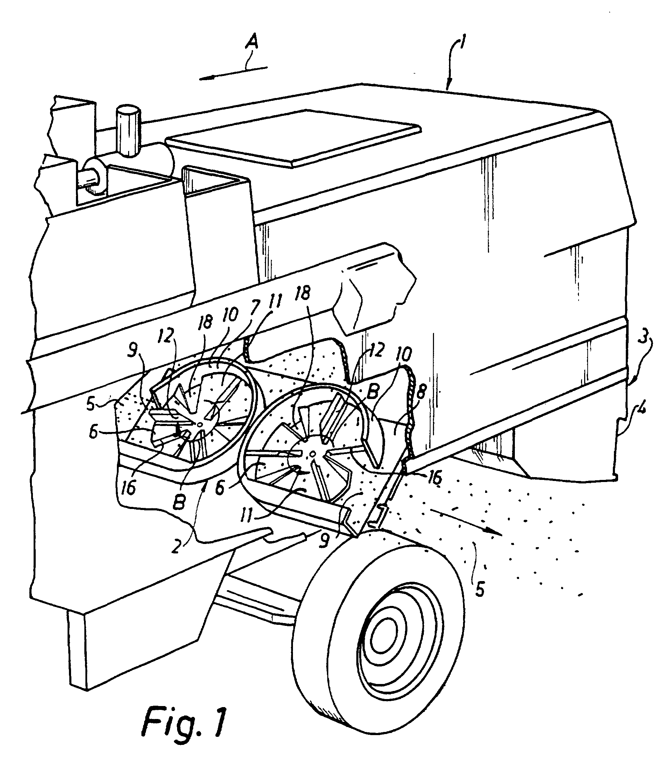

In accordance with the embodiment illustrated and described the spreader 2 preferably is pivotally suspended from the harvester combine 1 downstreem of the rear edge of the sieves, thus allowing the spreader to be held fast in the spreading position illustrated in Fig. 1, as well as in at least one further downwardly/rear-wardly folded position, for instance when spreading of husks and chaff is not desirable or for the purpose of checking waste and for sieve adjustments. The same downwardly/rearwardly folded position may be used to dismount the sieves without having to dismount the spreader 2 proper.

Obviously, the invention must not be considered to be restricted to the embodiment illustrated and described but could be modified in several ways within the scope of the claimed protection, as defined by the appended claims.

## Claims

1. A device for spreading husks and chaff (5) from the sieves of a harvester combine (1), said spreader (2) comprising at least one disc (6), which is rotatably mounted in a housing (7) having an end wall facing away from the sieves and a peripheral wall (10) formed with at least one outlet opening (9) therein, the disc (6) supporting on its face (11) turned towards the sieves ejection blades (12) projecting outwardly from the said disc face and supporting on its opposite face (15) turned towards the end wall (8) fan blades (16) projecting from said opposite disc face, **characterized in that** the disc (6) is formed with through recesses (18) extending between the disc faces (11, 15) to supply air from the disc face (11) turned towards the sieves to the disc face (15) turned towards the end wall (8) and thus, by means of the ejection blades (12) and the fan blades (16) to throw and to blow, respectively, the husks and the chaff (5) across substantially the entire cutting width of the cutting table of the harvester combine (1).

2. A spreader as claimed in claim 1, **characterized in that** the recesses (18) are formed intermediate to ejection blades (12) in succession.

3. A spreader as claimed in claim 2, **characterized in that** the recesses (18) are formed essentially halfway between two ejecting blades (12) in succession.

4. A spreader as claimed in any one of the preceding claims, **characterized in that** two or more recesses (18) are formed between two ejection blades (12) in succession.

5. A spreader as claimed in any one of the preceding claims, **characterized in that** the recesses (18) have a configuration essentially similar to that of a sector of a circle as seen substantially perpendicuraly to the plane of the disc, the lengthwise edges (19, 20) of the thus configured recess extending essentially radially towards the centre (C) of the disc (6), from the peripheral edge (21) of the disc to a point (22) situated intermediate the peripheral edge (21) and the centre (C).

6. A spreader as claimed in claim 5, **characterized in that** the point (22) intermediate the peripheral edge (21) of the disc (6) and the disc centre (C) is positioned closer to the centre than to the peripheral edge.

7. A spreader as claimed in any one of the preceding claims, **characterized in that** the number of fan blades (16) equals the number of recesses (18), said blades defining the front lengthwise edge (19) of the subsequent recess (18) as seen in the direction of rotation (B) of the disc (6).

8. A spreader as claimed in any one of claims 5-7, **characterized in that** the trailing lengthwise edge (20) of the disc (6), as seen in the rotational direction (B) of said disc, is angled slightly obliquely upwards (at 23), at least in some of the recesses (18), on the face (11) of the disc (6) turned towards the sieves, in order to further improve the supply of air to the fan blades (16) on the opposite face (15) of the disc (6).

9. A spreader as claimed in any one of the preceding claims, **characterized in that** it comprises two discs (6) which are rotatable in opposite directions and which are mounted for rotation in a common housing (7), said discs having a common end wall (8) but one peripheral wall each, each such wall formed with at least one discharge opening (9) therein.

10. A spreader as claimed in any one of the preceding claims, **characterized in that** it is pivotally suspended on the harvester combine (1) downstream of the rear edge of the sieves, and such it may be held fast in a spreading position as well as in at least one further downwardly/rearwardly folded position, when spreading of husks and chaff (5) is not desirable, or for checking waste and for sieve adjustments, alternatively for allowing dismantling of the sieves without dismantling the spreader (2).

## Patentansprüche

1. Vorrichtung zur Verteilung von Hülsen und Spreu (5) aus den Sieben eines Mähdreschers (1), wobei der Verteiler (2) mindestens eine Scheibe (6) umfaßt, die in einem Gehäuse (7) drehbar angebracht ist, das eine den Sieben abgewandte Stirnwand und eine mit mindestens einer Auslaßöffnung (9) darin ausgebildete Umfangswand (10) aufweist, wobei die Scheibe (6) auf ihrer den Sieben zugewandten scheibenfläche (11) Auswurfflügel (12) stützt, die von der Scheibenfläche nach außen ragen, und auf ihrer der Stirnwand (8) zugewandten, gegenüberliegenden Fläche (15) Gebläseflügel (16) aufweist, die von der gegenüberliegenden Scheibenfläche ragen, **dadurch gekennzeichnet, daß** die Scheibe (6) mit Durchgangsaussparungen (18) ausgebildet ist, die sich zwischen den Scheibenflächen (11, 15) erstrecken, damit sie der der Stirnwand (8) zugewandten Scheibenfläche (15) von der den Sieben zugewandten Scheibenfläche (11) Luft zuführen und somit mittels der Auswurfflügel (12) und der Gebläseflügel (16) die Hülsen und die Spreu (5) über im wesentlichen die gesamte Schneidbreite des Schneidtischs des Mähdreschers schleudern bzw. blasen.

2. Verteiler nach Anspruch 1, **dadurch gekennzeichnet, daß** die Aussparungen (18) zwischen zwei aufeinanderfolgenden Auswurfflügeln (12) ausgebildet sind.

3. Verteiler nach Anspruch 2, **dadurch gekennzeichnet, daß** die Aussparungen (18) im wesentlichen in der Mitte zwischen zwei aufeinanderfolgenden Auswurfflügeln (12) ausgebildet sind.

4. Verteiler nach einem der vorhergehenden Ansprüche, **dadurch gekennzeichnet, daß** zwischen zwei aufeinanderfolgenden Auswurfflügeln (12) zwei oder mehr Aussparungen (18) ausgebildet sind.

5. Verteiler nach einem der vorhergehenden Ansprüche, **dadurch gekennzeichnet, daß** die Aussparungen (18) eine Konfiguration haben, die, mit Blickrichtung im wesentlichen senkrecht zur Scheibenebene, im wesentlichen der eines Kreissektors ähnelt, wobei sich die Längsränder (19, 20) der so konfigurierten Aussparung vom Umfangsrand (21) der Scheibe zu einer sich zwischen dem Umfangsrand (21) und der Mitte (C) befindenden Stelle (22) im wesentlichen radial zur Mitte (C) der Scheibe (6) erstrecken.

6. Verteiler nach Anspruch 5, **dadurch gekennzeichnet, daß** die zwischen dem Umfangsrand (21) der Scheibe (6) und der Scheibenmitte (C) liegende Stelle (22) näher an der Mitte als am Umfangsrand liegt.

7. Verteiler nach einem der vorhergehenden Ansprüche, **dadurch gekennzeichnet, daß** die Anzahl der Gebläseflügel (16) gleich der Anzahl der Aussparungen (18) ist, wobei die Flügel den vorderen Längsrand (19) der in Drehrichtung (B) der Scheibe (6) gesehen nachfolgenden Aussparung (18) definieren.

8. Verteiler nach einem der Ansprüche 5 - 7, **dadurch gekennzeichnet, daß** der in Drehrichtung (B) der Scheibe gesehen hintere Längsrand (20) der Scheibe (6) bei zumindest einigen der Aussparungen (18) auf der den Sieben zugewandten Fläche (11) der Scheibe (6) (bei 23) leicht schräg nach oben abgewinkelt ist, um die Luftzufuhr zu den Gebläseflügeln (16) auf der gegenüberliegenden Fläche (15) der Scheibe (6) zu verbessern.

9. Verteiler nach einem der vorhergehenden Ansprüche, **dadurch gekennzeichnet, daß** er zwei Scheiben (6) umfaßt, die in entgegengesetzten Richtungen drehbar und zur Drehung in einem gemeinsamen Gehäuse (7) angebracht sind, wobei die Scheiben eine gemeinsame Stirnwand (8), aber jeweils eine Umfangswand aufweisen, wobei jede solche Wand mit mindestens einer Austragsöffnung (9) darin ausgebildet ist.

10. Verteiler nach einem der vorhergehenden Ansprüche, **dadurch gekennzeichnet, daß** er stromabwärts des hinteren Rands der Siebe am Mähdrescher schwenkbar aufgehängt ist und somit sowohl in einer Verteilposition als auch in mindestens einer weiteren nach unten/nach hinten gefalteten Position festgehalten werden kann, wenn ein Verteilen von Hülsen und Spreu (5) nicht gewünscht wird oder zur Kontrolle von Abfällen und für Siebeinstellungen oder, als Alternative, um ein Abmontieren der Siebe ohne Abmontieren des Verteilers (2) zu gestatten.

## Revendications

1. Dispositif pour l'épandage de glumes et de balles (5) à partir des tamis d'une moissonneuse-batteuse (1), ledit épandeur (2) comprenant au moins un disque (6) qui est monté en rotation dans un logement (7) comportant une paroi terminale se détournant des tamis et une paroi périphérique (10) dans laquelle est pratiquée au moins une ouverture de sortie (9), le disque (6) supportant, sur sa face (11) tourner vers le des tamis, des lames d'éjection (12) faisant saillie vers l'extérieur par rapport à ladite surface du disque et supportant, sur sa face opposée (15) tournée vers la paroi terminale (8) des ailettes de ventilation (16) faisant saillie par rapport à ladite face opposée du disque, **caractérisé en ce que** le disque (6) comprend des évidements traversants (18) s'étendant entre les faces (11, 15) du disque pour acheminer de l'air depuis la face (11) du disque tournée vers les tamis jusqu'à la face (15) du disque tournée vers la paroi terminale (8) dans le but, à l'aide des lames d'éjection (12) et des ailettes de ventilation (16), d'éjecter et de souffler, respectivement, les glumes et les balles (5) sur essentiellement toute la largeur de coupe de la table de la moissonneuse-batteuse (1) destinée à cet effet.

2. Epandeur selon la revendication 1, **caractérisé en ce que** les évidements (18) sont pratiqués entre des lames d'éjection (12), l'un à la suite de l'autre.

3. Epandeur selon la revendication 2, **caractérisé en ce que** les évidements (18) sont pratiqués essentiellement à mi-distance entre deux lames d'éjection (12), l'un à la suite de l'autre.

4. Epandeur selon l'une quelconque des revendications précédentes, **caractérisé en ce que** deux évidements ou plus (18) sont pratiquées entre deux lames d'éjection (12) l'un à la suite de l'autre.

5. Epandeur selon l'une quelconque des revendications précédentes, **caractérisé en ce que** les évidements (18) possèdent une configuration essentiellement similaire à celle d'un secteur de cercle, lorsqu'on regarde en position essentiellement perpendiculaire au plan du disque, les bords longitudinaux (19, 20) de l'évidement ainsi configuré s'étendant essentiellement en direction radiale vers le centre (C) du disque (6), depuis le bord périphérique (21) du disque jusqu'à un endroit (22) situé entre le bord périphérique (21) et le centre (C).

6. Epandeur selon la revendication 5, **caractérisé en ce que** l'endroit (22) situé entre le bord périphérique (21) du disque (6) et le centre (C) du disque est disposé plus près du centre que du bord périphérique.

7. Epandeur selon l'une quelconque des revendications précédentes, **caractérisé en ce que** le nombre d'ailettes de ventilation (16) est égal au nombre d'évidements (18), lesdites ailettes définissant le bord longitudinal frontal (19) de l'évidement suivant (18) lorsqu'on regarde dans la direction de rotation (B) du disque (6).

8. Epandeur selon l'une quelconque des revendications 5 à 7, **caractérisé en ce que** le bord longitudinal arrière (20) du disque (6) lorsqu'on regarde dans la direction de rotation (B) dudit disque, forme un angle légèrement oblique vers le haut (en 23), au moins dans un certain nombre des évidements (18), sur la face (11) du disque (6) tournée vers les tamis, dans le but d'améliorer davantage l'alimentation d'air aux ailettes de ventilation (16) sur la face opposée (15) du disque (6).

9. Epandeur selon l'une quelconque des revendications précédentes, **caractérisé en ce qu'**il comprend deux disques (6) aptes à tourner dans des directions opposées et qui sont montés à des fins de rotation dans un logement commun (7), lesdits disques possédant une paroi terminale commune (8), mais une paroi périphérique chacun, au moins une ouverture d'évacuation (9) étant pratiquée dans chacune desdites parois.

10. Epandeur selon l'une quelconque des revendications précédentes, **caractérisé en ce qu'**il est suspendu en pivotement sur la moissonneuse-batteuse (1) en aval du bord arrière des tamis, et de telle sorte qu'il peut être maintenu dans une position d'épandage, ainsi que dans au moins une position dans laquelle il est disposé plus bas/rétracté vers l'arrière, lorsqu'un épandage de glumes et de balles (5) n'est pas souhaitable, ou pour vérifier les déchets et pour régler les tamis, en variante pour permettre le démontage des tamis sans devoir démonter l'épandeur (2).
